# EUROPEAN PATENT APPLICATION

(11) **EP 4 484 112 A1**
(43) Date of publication of application: **01.01.2025**
(21) Application number: 23182118.2
(22) Date of filing: 28.06.2023
(51) Int. Cl.: B29C 43/24, B29C 48/00, B29C 59/04, B29C 55/18, B29C 55/06, B29C 55/02, B29L 31/00, B29K 27/06

(54) **PROCESS FOR MAKING SHEETS OF A PLASTIC MATERIAL**

(71) Applicant: Rodolfo Comerio Srl, 21058 Solbiate Olona (VA) (IT)
(72) Inventor: COMERIO, Carlo, 21058 Solbiate Olona (VA) (IT)
(74) Representative: M. Zardi & Co S.A.

(57) **Abstract**

Process for making sheets or slabs of a plastic material that is optionally mixed with at least one filler material, for example, thin PVC films or PVC slabs filled with stone dust for flooring, wherein said process comprises a step of extruding the material through a flat die extruder (1) and calendering (2) the extrudate, thus obtaining the sheet or slab of desired thickness.

## Description

### Field of application

The invention relates to the field of the production of sheets or slabs of a plastic material for industry purposes, possibly with the addition of a filler material.

### Prior art

It is known to process plastic materials, in particular thermoplastic polymers, in the form of sheets or slabs. The terms sheet and slab typically indicate a product whose thickness is much less than its width, for example with a thickness of a few millimeters, or even less than a millimeter, and one or two meters of width. More precisely, in the present description, the term sheet is used to denote a thin sheet product with a thickness generally less than a millimeter, such as a PVC film, while the term slab is used to denote bigger thicknesses, typically of few millimeters.

Sheets or slabs of a thermoplastic polymer (typically PVC), possibly filled with other material and/or with additives, are of industrial interest for various applications. Thin PVC sheets, for example, have several uses in the packaging and paper industry. PVC slabs filled with stone dust are used for floors known with the abbreviation SPC (Stone Polymer Composite). Another interesting sector for the products considered herein is the manufacturing of credit cards or badges.

In the prior art, the sheets or slabs referred to are typically manufactured by extrusion. The polymer, usually in the form of pellets, is fed to an extruder where it is melted and brought to the plastic state, then it passes through an extrusion head which gives the desired width and thickness to the product (flat die extrusion).

The flat die extrusion technique has some disadvantages: low production speed; poor accuracy in determining the thickness; limited lifetime of the extruder especially for processing slabs having a considerable thickness and made of a relatively rigid material such as PVC with a high stone dust content. There would be a need for a process that could mitigate or eliminate these disadvantages, but this need has not yet been satisfied.

It is also known to make sheets of a plastic material by calendering, in which the polymer is melted and brought to the plastic state, then passed through several calendering cylinders.

### Summary of the invention

The invention has the aim of proposing a new process for industrially making the products considered herein and eliminating the disadvantages associated with flat die extrusion, as outlined above.

The aim is achieved with a process according to the claims. The basic idea of the invention is to associate an extrusion process with a calendering process. The term calendering, as it is known, indicates the passage of material between two counter-rotating cylinders.

In the invention, the desired dimensional features of the sheet or slab (thickness and width) are not obtained directly at the outlet of the extruder, but through the subsequent calendering. The invention adopts a two-step process in which the material is extruded and subsequently calendered. This relieves the stresses of the extrusion process allowing for higher production speeds and longer extruder life. Obtaining the desired thickness of the sheet or slab is entrusted to the calendering process that is intrinsically fast, precise and does not represent a "bottleneck". Thanks to the calendering, a uniform thickness of the sheet or slab is obtained. The extrusion process, on the other hand, is essentially used to bring the material to a plastic state and prepare an optimal flat extrudate for feeding to the calender. The invention therefore combines the two processes in an ingenious way.

The calendering of the invention is performed with a linear pressure, measured parallel to the axis of the cylinders, of at least 100 kg/cm, preferably 100 to 1000 kg/cm or 200 to 1000 kg/cm. This pressure differentiates the calendering from calibration processes which are generally operated by passing the material between small cylinders and with pressures not greater than 20 kg/cm. The symbol kg stands for kilogram-force, which can be assumed equal to 9.8 N.

The invention also relates to an extruder-calender group for obtaining sheets or slabs according to the claims.

Preferred applications of the invention include: the making of plastic film with small thickness, typically 100 microns or less; the making of PVC slabs with a high content of filler material and great thickness, for example 3 to 6 mm. Said slabs are of particular interest for making SPC floors.

### Description of the invention

A process according to the invention is aimed at making a semi-finished product made with a source plastic material that comprise a thermoplastic polymer, optionally with addition of a filler material. If necessary, the material can comprise one or more additives in a small percentage.

The process comprises:
extruding the material through a flat die extruder, thus obtaining a flat shape extrudate;
calendering the extrudate through the passage between at least two counter-rotating cylinders, thus obtaining a thin sheet or a slab;
wherein the calendering takes place with a linear pressure, measured parallel to the axis of said cylinders, of at least 100 kg per centimeter.

Said pressure is more preferably 100 to 1000 kg/cm or 200 to 1000 kg/cm.

In the calendering step, the thickness of the extrudate is substantially reduced, being the calendering step that actually gives the material the desired sheet or slab thickness. In a preferred embodiment, the thickness is reduced by at least 50% during the calendering step; consequently, the sheet thickness turns out to be half or less the extrudate thickness. Consequently, the speed of the product at the outlet of the calender is double, or higher, the inlet speed in the calender.

In the various applications of the invention, the preferred thermoplastic polymer is PVC. The filler material, if used, is preferably CaCO3; however, it is clear that other filler materials may be used in addition or instead.

In all applications, an embossing step can be provided for at least one surface of the sheet or slab. Preferably said embossing step is performed with a passage of the material between two cylinders, of which at least one has a suitably engraved surface to produce the embossing. Embossing generates a surface "pattern" that can have an aesthetic and/or technical function, for example, think of a desired surface finish of a plastic film or a lower surface of a floor slab with an embossing that facilitates gluing during installation.

Two preferred applications of the invention are described below, thin films and slabs of filled plastic material, respectively.

### Thin film application

The processed material is preferably a polymer free from filler material (for example PVC) and the sheet exiting the calender has a thickness of less than 1 mm, preferably not greater than 0.5 mm.

The thin sheet obtained by calendering can be subjected to a longitudinal stretching process. This process is operated by passing the sheet between two or more stretching cylinders with increasing peripheral speed. In the stretching group, each cylinder rotates in the opposite direction with respect to the previous cylinder and the product passes through the cylinders in order to undergo the desired stretching effect. Typically, said stretching cylinders have a diameter significantly smaller than the diameter of the calendering cylinders. For example, the diameter of the stretching cylinders can be 1/4 the diameter of the calendering cylinders, or less.

Advantageously, a stretching cylinder group is provided immediately downstream of the calender cylinder pair. This group performs the double function of detaching the sheet from the calender and reducing the thickness by longitudinally hot stretching the material. The final thickness after the stretching step, in some applications, may be less than 0.1 mm (100 micron). The term micron means micrometers (µm).

The number of stretching cylinders may vary; in preferred embodiments it is between 3 and 10. Preferably, the stretching cylinders are horizontally aligned. Preferably, the first stretching cylinder is nearly in contact with one of the calendering cylinders to obtain the detachment of the sheet from the latter and keep the sheet properly guided.

In preferred applications, the extrudate has a thickness of 0.2 mm to 0.5 mm. The thin sheet (or film) obtained by calendering has a smaller thickness than the extrudate. Preferably, after calendering the thin sheet has a thickness of 100 to 300 microns or 150 to 300 microns. The subsequent stretching step of the material, if performed, further reduces the thickness; for example, said stretching step can bring the material to a thickness of 100 microns or less, for example 60 to 100 microns or 60 to 80 microns.

In a preferred application for PVC film, the extrusion produces a flat extrudate in the form of a foil with a thickness of about 200 microns; calendering said foil produces a film with a thickness of about 100 microns; the next stretching step brings the thickness of the film to a value below 100 microns, for example 60 to 80 microns.

The width of a PVC film obtained with the process of the invention can be about 2 meters, for example 1.5 meters to 2.5 meters.

The embossing step, if provided, is preferably performed with two embossing cylinders positioned downstream of the stretching cylinders. One of the two cylinders has a suitably engraved surface to produce the embossing of the plastic film. Said embossing cylinders are preferably both made of steel.

### Filled polymer slab application

In a second preferred application, the processed material is a thermoplastic polymer mixed with filler material. The preferred material is PVC mixed with calcium carbonate CaCO3 called "stone dust", or equivalent material. The quantity of the filler material may be predominant over the thermoplastic polymer, for example a favorite application provides a compound of PVC and stone dust where the latter represents at least 50% by weight, preferably 50% to 80% by weight.

The slab obtained after calendering has a thickness of at least 1 mm, for example 1 mm to 6 mm. More preferably, the thickness is at least 1.5 mm and still more preferably 3 mm to 6 mm.

Given the thickness and stiffness of the slab produced by the calender, it is advantageous to provide a conveyor belt for detaching the slab from the calendering group and to transport the slab without losing its dimensional characteristics. Placing the slab on the belt avoids mechanical stresses due to the weight of the material and avoids deformations at the exit from the calender.

In the case of filled PVC slabs, the embossing group (if provided) preferably comprises a steel engraved cylinder and a contact cylinder with rubber outer surface (where the material abuts).

### Extruder-calender group

An extruder-calender group for obtaining sheets or slabs with the process of the invention comprises a flat die extruder and at least one pair of counter-rotating cylinders forming a calender, in which said pair of cylinders comprises an upper cylinder and a lower cylinder that define a gap space, in which the material flows.

The outlet opening of the flat die extruder is preferably positioned at the entrance of said pair of cylinders and faces directly towards the gap space. More preferably, the outlet opening of the extruder is positioned downstream of a vertical plane tangential to at least one of the calendering cylinders, with respect to the feed direction of the product; furthermore, the opening is vertically aligned, at the same height, with respect to the gap space.

This positioning of the extruder outlet causes the extrudate to move directly to the inlet of the calender with substantial continuity between the two process steps.

### Description of the figures

The figures illustrate some preferred embodiments in which:
FIG. 1 is a simplified side view of an extruder-calender group according to an embodiment the invention.
FIG. 2 is a detail of Fig. 1.
FIG. 3 is a detail similar to Fig. 2 but referring to another embodiment of the invention.

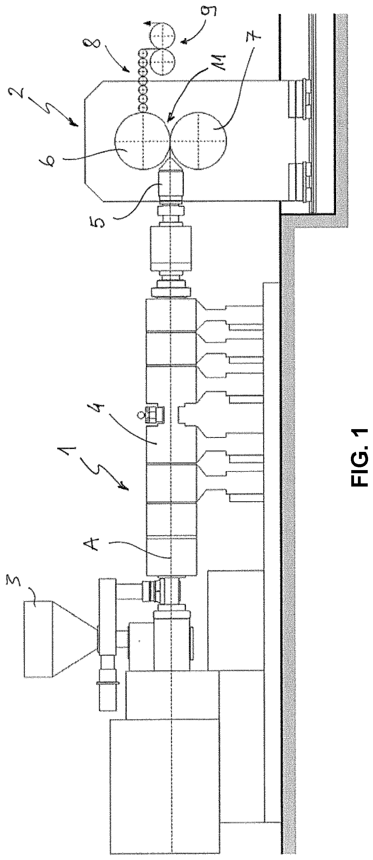

FIG. 1 shows a group for producing a PVC film essentially comprising an extruder 1 and a calender 2.

The extruder 1 comprises a loading hopper 3 where the material is fed, which for example is PVC in the form of solid pellets. The material is progressively brought to the plastic state in section 4 and exits from the flat extrusion head 5. The extruder 1 extends mainly in length, according to a longitudinal axis A, and ends with said flat extrusion head 5.

The calender 2 comprises two counter-rotating cylinders, precisely an upper cylinder 6 and a lower cylinder 7, which define a gap space 11. Downstream of the calender 2 is a series of stretching cylinders 8 and a further pair of embossing cylinders 9.

The extrusion head 5, as can be seen in the figure, is positioned immediately adjacent to the calender 2, so that the extrudate exiting the same head is immediately received in the gap space 11, where it is calendered by the action of the two cylinders 6 and 7 with suitable working pressure.

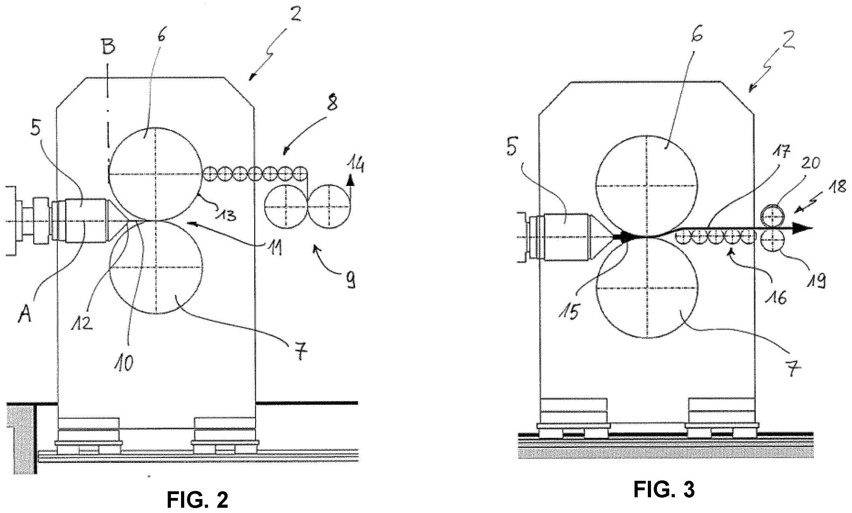

Further aspects of the group and its operation are illustrated in Fig. 2.

The extrusion head 5 has an outlet section 12, substantially shaped like an elongated slit, which produces an extrudate in the form of a thin flat foil 10, for example approximately 200 microns thick.

The gap space 11 is aligned with the axis A of the extruder 1, i.e., the axis A passes between the cylinders 6 and 7 crossing the gap space 11. The outlet section 12 of the extrusion head 5 is positioned downstream with respect to a vertical plane B tangent to the cylinders 6 and 7, where the term downstream is to be understood with reference to the feed direction of the product (to the right, in the figure). Accordingly, the output section 12 is positioned adjacent to the entrance of the gap space 11 and the extrudate 10 immediately passes to the calendering step as it exits the extruder.

In Fig. 2, the stretching cylinders 8 that detach the calendered sheet 13 from the upper cylinder 6 are also better visible. Note that the first stretching cylinder is positioned adjacent to the calendering cylinder 6 for the detachment of the sheet 13.

The passage of the sheet 13 between the cylinders 8 causes a longitudinal stretching and further reduces the thickness. For this purpose, the stretching cylinders 8 have increasing speeds. The sheet passes progressively between the adjacent stretching cylinders 8.

After the stretching step and the thickness reduction, the sheet is embossed as it passes between the cylinders of group 9, obtaining an embossed sheet 14 of desired thickness.

FIG. 3 is analogous to Fig. 2 but illustrates a variant suitable for thicker SPC slabs, typically over 1 mm thick. Extruder 1 is similar to the one described in Figs. 1 and 2 and is therefore not described again. The accumulation of plastic material 15 is shown at the entrance of the calender 2. This accumulation tends to form due to the effect of the material being more rigid than the previously described PVC film.

A conveyor 16 collects the slab 17 exiting the calender 2 and directs it towards an embossing group 18. The conveyor 16 can be in the form of a conveyor belt or a series of rolls on which the slab 17 rests.

Preferably, said embossing group 18 comprises a lower steel cylinder 19 with an engraved surface and an upper cylinder 20 with a rubber surface. The lower cylinder 19 engraves the desired embossing pattern on the lower surface of the slab 17.

## Claims

1. Process for making sheets or slabs of a plastic material in which:
said plastic material comprises a thermoplastic polymer optionally mixed with at least one filler material,
and said process comprises:
extruding the material through a flat die extruder (1), thus obtaining a flat shape extrudate;
calendering the extrudate through the passage between at least two counter-rotating cylinders (6, 7), thus obtaining a thin sheet or a slab,
in which the calendering takes place with a linear pressure, measured parallel to the axis of said cylinders, of at least 100 kg per centimeter.

2. Process according to claim 1 wherein said pressure is between 100 kg/cm and 1000 kg/cm.

3. Process according to claim 1 or 2 wherein the thickness of the extrudate is reduced by at least 50% during the calendering step, the thickness of the sheet or slab after calendering being half or less with respect to the thickness of the extrudate.

4. Process according to one of the preceding claims wherein said plastic material, that is subjected to extrusion and calendering, is a polymer free from filler material, with possible additives, and wherein the sheet (13) obtained by calendering is subjected to a step of longitudinal stretching and reduction of thickness through one or more passages between stretching cylinders (8).

5. Process according to claim 4, wherein the extrudate (10) has a thickness of 0.2 mm to 0.5 mm and the sheet obtained by calendering has a thickness of 100 to 300 microns, or preferably 150 to 300 microns.

6. Process according to claim 5, wherein the thickness of the sheet after stretching is not greater than 100 microns, preferably 60 to 100 microns or 60 to 80 microns.

7. Process according to one of claims 1 to 3, wherein the material subjected to extrusion and calendering is a polymer mixed with filler material and the thickness after calendering is 1 mm to 6 mm, preferably 3 mm to 6 mm.

8. Process according to claim 7, wherein the filler material is calcium carbonate and the amount of said filler material is at least 50% by weight of the compound.

9. Process according to any one of the preceding claims, wherein the thermoplastic polymer is PVC.

10. Process according to one of preceding claims, comprising a step of embossing at least one surface of the sheet or slab obtained after calendering or after stretching.

11. Extruder-calender group for obtaining sheets or slabs with the process of one of claims 1 to 10, comprising a flat die extruder (1) and at least one pair of counter-rotating cylinders forming a calender (2), wherein said cylinder pair comprises an upper cylinder (6) and a lower cylinder (7), separated by a gap space (11) in which the product to be calendered flows.

12. Group according to claim 11, wherein said flat die extruder (1) has an outlet opening (12) that is positioned downstream of a vertical plane (B) tangent to at least one of the cylinders of the calender (2), with respect to feed direction of the product, and it is also positioned vertically at the height of the gap space (11), said position of the extruder outlet being thus suitable for feeding the extrudate (10) directly into the gap space (11) of the calender.

13. Group according to claim 11 o 12, comprising downstream of the calender a longitudinal stretching group (8) for small thickness plastic films, said stretching group comprising a series of cylinders lined up and rotating at increasing speeds, wherein each cylinder of the stretching group rotates in the opposite direction with respect to the cylinder or cylinders of the stretching group adjacent thereto, and the product is stretched by passing between the cylinders of said stretching group, and wherein the cylinders of the stretching group have a smaller diameter than the calendering cylinders.

14. Extruder-calender group according to claim 11 o 12, comprising a conveyor (16) for SPC slabs, positioned downstream of the calender.

15. Group according to claim 13 or 14, comprising at least one pair of embossing cylinders (9, 18) downstream of the stretching group (8) or respectively downstream of the conveyor (16).
